# DEMANDE DE BREVET EUROPEEN

(11) **EP 3 023 217 A1**
(43) Date de publication de la demande: **25.05.2016**
(21) Numéro de dépôt: 15196065.5
(22) Date de dépôt: 24.11.2015
(51) Int. Cl.: B29C 45/00, B29C 45/56, B29C 45/16, B29C 45/04, B29C 33/34, B29C 45/37

(54) **MOULE D'INJECTION ROTATIF ET PROCÉDÉ D'INJECTION RELATIF AUDIT MOULE D'INJECTION ROTATIF**

(30) Priorité: 24.11.2014 FR 1461363
(71) Demandeur: JP Grosfilley, 01100 Martignat (FR)
(72) Inventeur: GAUDIN, Philippe, 01100 Groissiat (FR); GROSFILLEY, Jean Pierre, 01410 Mijoux (FR)
(74) Mandataire: Chevalier, Renaud Philippe

(57) **Abrégé**

L'invention concerne un moule d'injection rotatif (1) comprenant :
- une première partie de moule (2) fixe présentant au moins une empreinte de moulage (4),
- une deuxième partie de moule (3) mobile positionnée en regard de la première partie de moule (2),
- au moins une empreinte de moulage complémentaire (5) à l'empreinte de moulage de la première partie de moule (2),
- au moins un chargeur (6) configuré pour se déplacer au moins en rotation entre au moins un premier poste (101) dit premier poste d'injection et au moins un deuxième poste(102, 103, 104, 105, 106), ledit au moins un chargeur (6) étant positionné entre la première partie de moule (2) et la deuxième partie de moule (3),
- au moins une buse d'injection (8) de matière configurée pour introduire au moins une quantité de matière dans un espace de moulage délimité par l'empreinte de moulage (4) de la première partie de moule (2) et l'empreinte de moulage complémentaire (5),

caractérisé en ce que le moule d'injection rotatif (1) comprend en outre au moins un dispositif de compression (9) configuré pour compresser au moins une quantité de matière injectée par la buse d'injection (8) dans l'espace de moulage de sorte à former une préforme (7a) de pièce ou une pièce finie (7c). De plus, l'invention concerne un procédé d'injection.

## Description

La présente invention concerne le domaine du moulage de pièces par injection et notamment les pièces à paroi forte.

Généralement, les pièces injectées présentent une épaisseur d'environ 2,5 mm. Les pièces présentant une épaisseur inférieure à 2,5 mm, sont dites pièces à paroi fine. Les pièces présentant une épaisseur supérieure à 2,5 mm sont dites pièces à paroi forte.

Dans la présente demande, on entend par « pièces à paroi forte» des pièces présentant une épaisseur supérieure à environ à 2,5 mm et préférentiellement supérieure ou égale à 5 mm.

La technique d'injection présente plusieurs inconvénients sur le plan technique et sur le plan économique, lorsqu'on injecte des pièces à paroi forte présentant préférentiellement une épaisseur supérieure ou égale à 5 mm.

En effet, l'injection de pièces à paroi forte engendre la formation de bulles inesthétiques lors d'injection de matières transparentes. En outre, l'état de surface des pièces finies est difficile à maîtriser du fait du givrage visible en surface desdites pièces, le givrage étant, dans le cadre de l'invention, des microbulles formant des stries blanches sur la surface d'une pièce.

De plus, le retrait de la matière injectée et moulée n'est pas maîtrisé ce qui engendre des différences notables entre la pièce moulée finale et la pièce qu'on devrait obtenir théoriquement. Enfin, le temps de refroidissement de la matière injectée et moulée est très important du fait de l'épaisseur, ce qui influence le coût du moulage.

L'invention a pour but de remédier à tout ou partie des inconvénients précités.

L'invention a pour objet un moule d'injection rotatif comprenant :
- une première partie de moule fixe présentant au moins une empreinte de moulage,
- une deuxième partie de moule mobile positionnée en regard de la première partie de moule,
- au moins une empreinte de moulage complémentaire à l'empreinte de moulage de la première partie de moule,
- au moins un chargeur configuré pour se déplacer au moins en rotation entre au moins un premier poste dit premier poste d'injection et au moins un deuxième poste, ledit au moins un chargeur étant positionné entre la première partie de moule et la deuxième partie de moule,
- au moins une buse d'injection de matière configurée pour introduire au moins une quantité de matière dans un espace de moulage délimité par l'empreinte de moulage de la première partie de moule et l'empreinte de moulage complémentaire,
caractérisé en ce que le moule d'injection rotatif comprend en outre au moins un dispositif de compression configuré pour compresser au moins une quantité de matière injectée par la buse d'injection dans l'espace de moulage de sorte à former une préforme de pièce ou une pièce finie.

Grâce à ce type de moule d'injection rotatif, il est possible de réaliser des pièces de forte épaisseur par injection de couches successives de quantité de matière, tout en conservant un état de surface satisfaisant et la transparence de la matière le cas échéant. En effet, la compression suivant l'injection permet de maîtriser le retrait de la matière en tous points avec une pression faible et équilibrée sur toute la surface comprimée de l'espace de moulage, la pièce moulée étant ainsi plus fidèle à la forme des empreintes de moulage et donc plus précise.

La pression plus faible engendre moins de tensions internes ou « stress » lors du refroidissement, ce qui rend la pièce moulée moins fragile. Cela se traduit également par une minimisation des déformations dues à ces tensions internes. De plus, la pression dans l'espace de moulage étant plus faible lors de l'injection de la matière, le verrouillage du moule d'injection est allégé sur chaque poste d'injection disposant d'un dispositif de compression. Le moule d'injection peut donc être dimensionné de manière à être moins puissant en verrouillage.

En outre, les changements de direction de la matière sont réalisés à une moindre pression et à faible vitesse de manière à ce que les effets « fantômes », visibles dans le cas d'une injection traditionnelle de matière transparente, soient supprimés.

L'invention présente également l'avantage de réduire le temps de refroidissement des pièces formées puisque la matière peut s'injecter à une température plus basse du fait de la moindre exigence en fluidité, grâce à la pression faible de compression.

Enfin, grâce au mouvement rotatif du chargeur la pièce passe d'un poste à l'autre et se forme au fur et à mesure, permettant la réalisation de plusieurs opérations en simultané.

Selon une autre caractéristique de l'invention, l'empreinte de moulage de la première partie de moule comprend au moins une portion fixe et au moins une portion mobile, ladite portion mobile étant mobile en translation en direction de l'empreinte de moulage complémentaire de manière à faire varier la dimension de l'espace de moulage. Ainsi, il est possible d'injecter plusieurs couches de matière avec une même forme d'empreinte de moulage. De plus, comme on peut faire varier la dimension de l'espace de moulage la compression de la matière après injection est facilitée. En effet, la matière est injectée dans un espace de moulage de dimension plus grande grâce à la mobilité de la portion mobile de l'empreinte que celle définie pour former la préforme ou la pièce finie, de manière à ce que la matière s'étende dans l'espace de moulage avec des contraintes moindre, la compression est réalisée dans un espace de moulage réduit dont la dimension correspond à celle désirée pour la préforme ou la pièce finie.

Selon une autre caractéristique de l'invention, le dispositif de compression comprend au moins un élément de commande configuré pour gérer la vitesse de compression de la quantité de matière injectée.

Selon une autre caractéristique de l'invention, l'élément de commande de l'organe de compression peut être un vérin hydraulique ou numérique, une vis sans fin, etc. Bien entendu, l'invention n'est pas limitée à ces exemples.

Selon une autre caractéristique de l'invention, le dispositif de compression comprend un premier organe de compression mobile en translation et commandé par l'élément de commande, ledit premier organe de compression coopérant avec la portion mobile de l'empreinte de moulage de la première partie de moule de manière à ce que lorsque ledit premier organe de compression se déplace en translation, la portion mobile de l'empreinte de moulage de la première partie de moule se déplace en direction de l'empreinte de moulage complémentaire.

Selon une autre caractéristique de l'invention, le dispositif de compression comprend au moins un deuxième organe de compression.

Selon une autre caractéristique de l'invention, le deuxième organe de compression est mobile en translation et commandé par le même élément de commande que le premier organe de compression ou par un autre élément de commande indépendant.

Selon une autre caractéristique de l'invention, l'empreinte de moulage complémentaire comprend au moins une portion fixe et au moins une portion mobile, ladite portion mobile étant mobile en translation en direction de l'empreinte de moulage de la première partie de moule de manière à faire varier la dimension de l'espace de moulage.

Selon une autre caractéristique de l'invention, le premier organe de compression comprend une rampe de guidage avec laquelle la portion mobile de l'empreinte de moulage de la première partie de moule coopère et/ou le deuxième organe de compression comprend une rampe de guidage avec laquelle la portion mobile de l'empreinte de moulage complémentaire coopère.

De préférence, la rampe de guidage du premier organe de compression est continue et/ou la rampe de guidage du deuxième organe de compression est continue.

Selon une autre caractéristique de l'invention, le dispositif de compression comprend au moins un poinçon de compression.

Selon une autre caractéristique de l'invention, le premier organe de compression est équipé d'un poinçon de compression commandé par l'élément de commande, ledit poinçon de compression étant intercalé entre la portion mobile de l'empreinte de moulage de la première partie de moule et le premier organe de compression.

Selon une autre caractéristique de l'invention, le deuxième organe de compression est équipé d'un poinçon de compression commandé par l'élément de commande, ledit poinçon de compression étant intercalé entre la portion mobile de l'empreinte de moulage complémentaire et le deuxième organe de compression.

Selon une autre caractéristique de l'invention, au moins une partie du premier organe de compression est mobile en translation dans la première partie de moule. Préférentiellement, la rampe de guidage du premier organe de compression est mobile en translation dans la première partie de moule. De préférence, le poinçon de compression du premier organe de compression est mobile en translation dans la première partie de moule.

Selon une autre caractéristique de l'invention, au moins une partie du deuxième organe de compression est mobile en translation dans la deuxième partie de moule. Préférentiellement, la rampe de guidage du deuxième organe de compression est mobile en translation dans la deuxième partie de moule. De préférence, le poinçon de compression du deuxième organe de compression est mobile en translation dans la deuxième partie de moule.

Selon une autre caractéristique de l'invention, au moins un des organes de compression, préférentiellement chaque organe de compression, peut être conçu avec un mouvement numérisé ou un vérin hydraulique agissant dans le même sens que la compression.

Selon une caractéristique de l'invention, le deuxième poste de fabrication est un deuxième poste d'injection ou un poste de refroidissement ou autre.

Selon une autre caractéristique de l'invention, le moule d'injection comprend une pluralité de postes dont au moins deux sont des postes d'injection d'une quantité de matière prédéterminée.

Selon une autre caractéristique de l'invention, le moule d'injection comprend au moins un poste de refroidissement.

Selon une autre caractéristique de l'invention, le moule d'injection comprend au moins un poste d'éjection.

Selon une caractéristique de l'invention, le moule comprend au moins une buse d'injection par poste d'injection.

Selon une autre caractéristique de l'invention, le moule d'injection comprend au moins un organe de compression associé à une buse d'injection au moins sur le premier poste d'injection.

Préférentiellement, chaque buse d'injection est associée à au moins un organe de compression.

Selon une autre caractéristique de l'invention, l'injection est déportée latéralement sur le chargeur mobile, ce qui permet le transfert de la préforme ou pièce en rotation.

L'invention concerne également un procédé d'injection mettant en oeuvre un moule d'injection rotatif selon l'invention, comprenant les étapes suivantes :
- fermeture du moule d'injection rotatif,
- mise en oeuvre d'un cycle d'injection comprenant les sous-étapes suivantes:
   - sous-étape A : injection d'une première quantité matière dans l'espace de moulage, sur un premier poste,
   - sous-étape B : refroidissement de la préforme de pièce,
   - sous-étape C : injection d'une deuxième quantité matière dans l'espace de moulage sur au moins une surface de la préforme de pièce sur un deuxième poste,
   - la sous-étape A et/ou la sous-étape C étant suivie d'une compression de la matière injectée,
   - sous-étape D : refroidissement de la préforme de pièce ou d'une pièce finie obtenue en sous-étape C,
- éjection de la pièce finie ou mise en oeuvre d'un autre cycle d'injection jusqu'à ce que la pièce finie soit réalisée,
- une rotation du chargeur étant effectuée avant et/ou après chaque sous-étape de refroidissement.

Selon une autre caractéristique de l'invention, au moins deux sous-étapes du cycle d'injection sont réalisées en simultané pour la formation de deux pièces finies ou préformes de pièces différentes.

Grâce à l'invention, il est possible de réaliser des pièces à paroi forte dont les couches de matière injectées sont réparties les unes sur les autres sur une surface de la pièce finie ou les couches de matière injectées sont réparties les unes sur les autres sur toute la périphérie de la pièce finie.

L'invention sera mieux comprise, grâce à la description ci-après, qui se rapporte à des modes de réalisation selon la présente invention, donnés à titre d'exemples non limitatifs et expliqués avec référence aux dessins schématiques annexés, dans lesquels:
- la figure 1 est une vue de dessus de la deuxième partie de moule avec chargeur d'un moule d'injection rotatif selon l'invention et selon un premier mode de réalisation de l'invention,
- la figure 2 est une vue en coupe transversale selon l'axe A-A d'un premier poste d'injection du moule d'injection représenté en figure 1,
- la figure 3 est une vue en coupe transversale une vue en coupe transversale selon l'axe A-A du premier poste d'injection du moule d'injection représenté en figure 1, lorsque le moule est ouvert,
- la figure 4 est une vue de la figure 3 est une vue en coupe transversale une vue en coupe transversale selon l'axe B-B d'un deuxième poste d'injection du moule d'injection représenté en figure 1,
- la figure 5 est une vue de la figure 4 est une vue en coupe transversale une vue en coupe transversale selon l'axe A-A d'un troisième poste d'injection du moule d'injection représenté en figure 1,
- la figure 6 est une vue en coupe transversale selon l'axe B-B d'un poste d'éjection du moule d'injection représenté en figure 1,
- la figure 7 est une vue en coupe transversale d'une pièce réalisée à partir du moule d'injection représenté en figure 1,
- la figure 8 est une vue de dessus de la deuxième partie de moule avec chargeur du moule d'injection selon un deuxième mode de réalisation de l'invention,
- la figure 9 est une vue en coupe transversale selon l'axe C-C du troisième poste d'injection et du premier poste de refroidissement du moule d'injection représenté en figure 8, lorsque le moule est ouvert,
- la figure 10 est une vue en coupe transversale selon l'axe C-C du troisième poste d'injection en cours d'injection et du premier poste de refroidissement, du moule d'injection représenté en figure 8,
- la figure 11 est une vue en coupe transversale selon l'axe C-C du troisième poste d'injection en cours de compression et du premier poste de refroidissement, du moule d'injection représenté en figure 8,
- la figure 12 représente schématiquement la pièce à fabriquer dans toutes les étapes de fabrication, poste par poste au moyen du moule d'injection représenté en figure 8.

La description qui va suivre concerne le moule d'injection rotatif 1 selon l'invention quel que soit le mode de réalisation de ce dernier.

Le moule d'injection rotatif 1 selon l'invention comprend une première partie de moule 2 et une deuxième partie de moule 3 positionnées en regard l'une de l'autre. Lorsque le moule d'injection rotatif 1 est fermé, la première partie de moule 2 est positionnée contre la deuxième partie de moule 3 de manière étanche afin de réaliser le moulage des pièces.

Le moule d'injection rotatif 1 comprend en outre un chargeur 6 mobile en rotation et en translation, positionné entre la première partie de moule 2 et la deuxième partie de moule 3. L'axe de translation du chargeur 6 est agencé sur la deuxième partie de moule 3 mais pourrait être agencé sur la première partie de moule de manière alternative.

Une pluralité d'empreintes de moulage 4 sont ménagées sur la première partie de moule 2 et une pluralité d'empreintes de moulage complémentaires 5 sont ménagées en regard desdites empreintes de moulage 4 soit sur la deuxième partie de moule 3 soit sur le chargeur 6. Chaque empreinte de moulage 4 est couplée avec une empreinte de moulage complémentaire 5 pour former un espace de moulage lorsque le moule d'injection rotatif 1 est fermé.

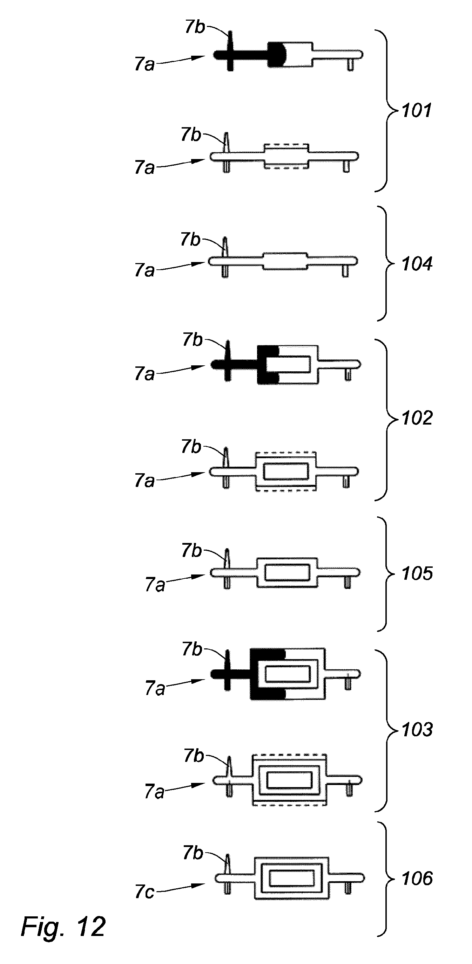

De plus, le moule d'injection rotatif 1 comprend au moins une buse d'injection 8 configurée pour introduire une quantité de matière dans un espace de moulage créé. L'injection est déportée latéralement sur le chargeur mobile 6, ce qui permet le transfert de la préforme 7a de pièce ou pièce finie 7c en rotation par les carottes d'injection 7b illustrées en figure 12 par exemple.

Enfin, le moule d'injection rotatif 1 comprend un dispositif de compression comportant au moins un organe de compression 9, 9' configuré pour compresser la matière introduite dans l'espace de moulage par la buse d'injection 8.

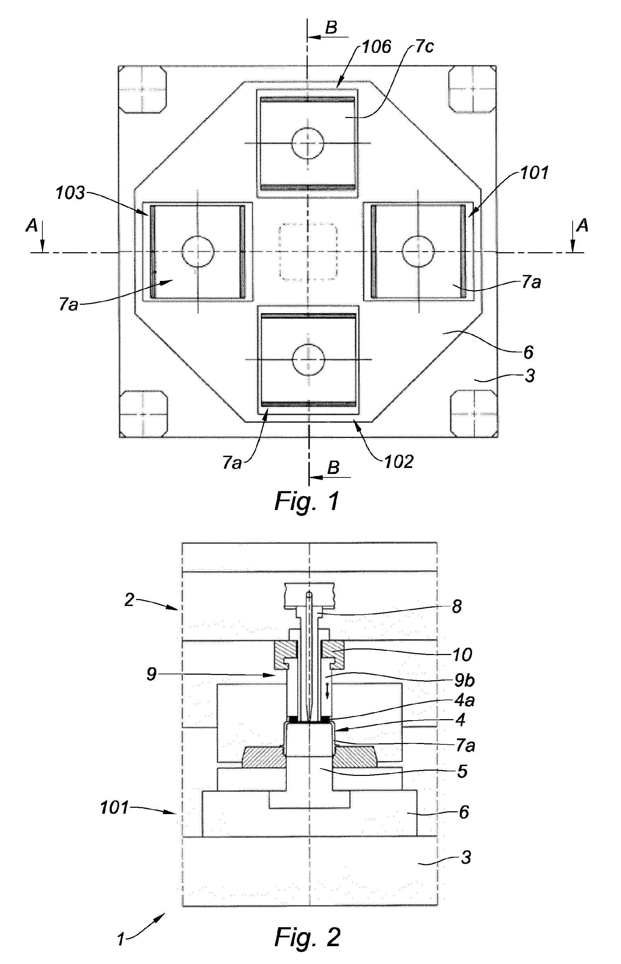

Un premier mode de réalisation du moule d'injection rotatif 1 va maintenant être décrit en référence aux figures 1 à 7.

Dans le premier mode de réalisation, le moule d'injection rotatif 1 comprend un premier poste d'injection 101, un deuxième poste d'injection 102, un troisième poste d'injection 103 et un poste d'éjection 106, comme illustré en figure 1. Les postes 101, 102, 103, 106 sont répartis circulairement de manière à ce que le chargeur 6 passe de l'un à l'autre cycliquement.

Dans le premier mode de réalisation du moule d'injection rotatif 1, le dispositif de compression comporte un seul organe de compression 9 par poste d'injection 101, 102, 103, au niveau de chaque buse d'injection 8, de manière à ce que les couches de matières injectées et compressées se superposent uniquement sur une surface de la pièce.

Chaque organe de compression 9 de chaque poste est commandé par un élément de commande (non représenté dans le premier mode de réalisation), et est équipé d'un poinçon de compression 9b. En outre, chaque organe de compression 9 comprend une rampe de guidage 10 sur laquelle repose une portion mobile 4a de l'empreinte de moulage 4 montée sur la première partie de moule 2.

L'élément de commande du dispositif de compression est un vérin hydraulique mais pourrait être un vérin numérique.

Lorsque l'on souhaite effectuer une compression suite à l'injection d'une quantité de matière déterminée, l'élément de commande contrôle la rampe de guidage 10 de sorte que ladite rampe de guidage 10 se déplace en translation dans une direction sensiblement perpendiculaire à l'axe de translation Y-Y du chargeur 6. Le poinçon de compression 9b exerce une poussée sur la portion mobile 4a de l'empreinte de moulage 4 engendrant la translation de la portion mobile 4a de l'empreinte de moulage 4 vers l'empreinte de moulage complémentaire 5 de manière à comprimer l'espace de moulage afin que la quantité de matière introduite s'applique dans tout l'espace de moulage de manière homogène.

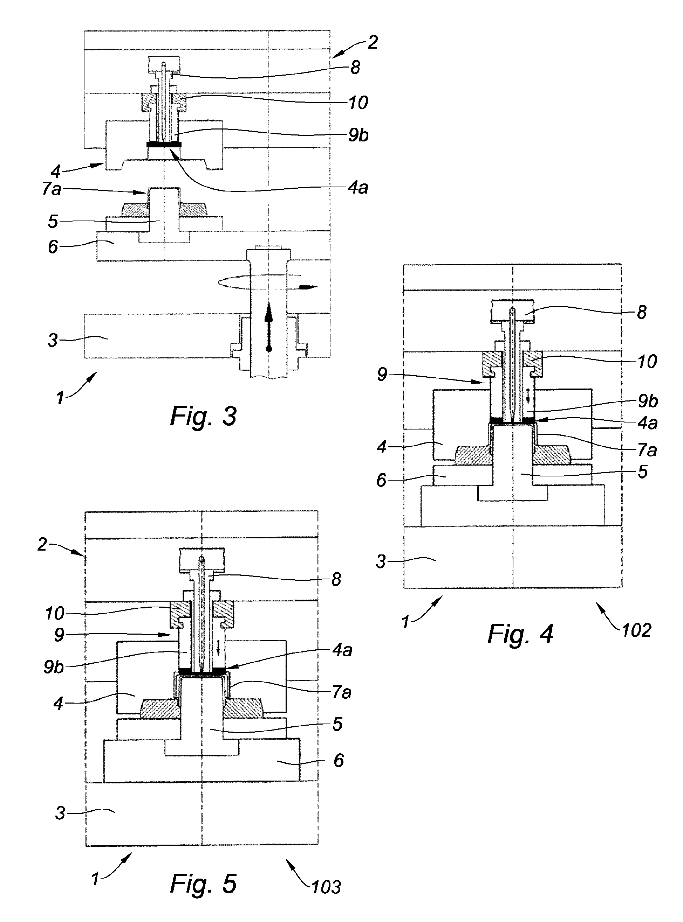

En figure 2 est représenté le premier poste d'injection 101 dans lequel la première couche de matière est injectée, compressée et refroidie de manière à former une préforme 7a de pièce qui sera ensuite déplacée grâce à la rotation du chargeur 6 au deuxième poste d'injection 102 comme illustré en figure 3.

En figure 4 est représenté le deuxième poste d'injection 102 dans lequel la deuxième couche de matière est injectée, compressée et refroidie de manière à former une préforme 7a de pièce qui sera ensuite déplacée grâce à la rotation du chargeur 6 au troisième poste d'injection 102 illustré en figure 5.

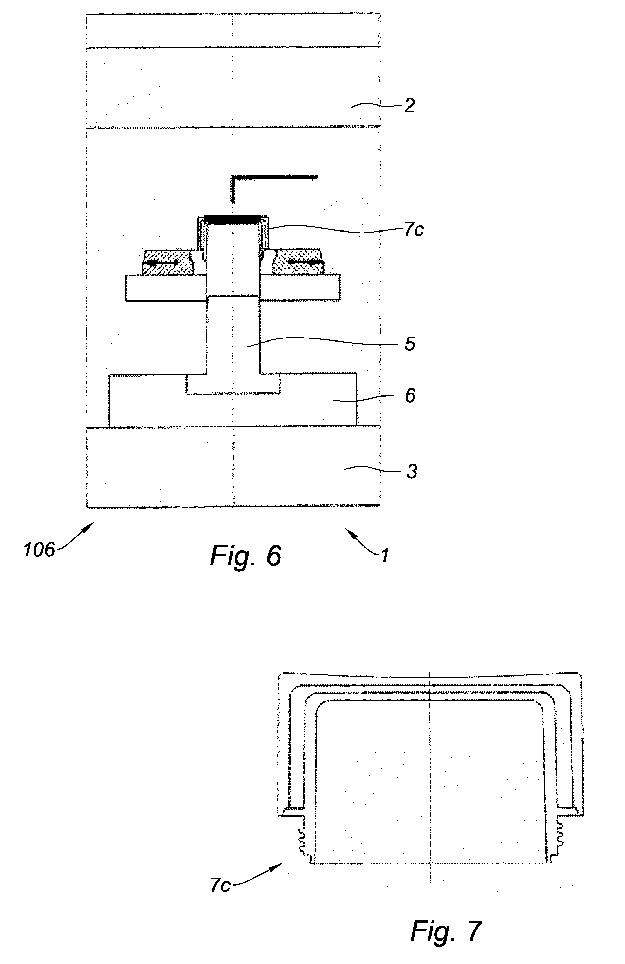

En figure 5 est représenté le troisième poste d'injection 103 dans lequel la troisième couche de matière est injectée, compressée et refroidie de manière à former une pièce finie 7c qui sera ensuite amenée par le chargeur 6 en poste d'éjection 106 pour être évacuée comme représenté en figure 6.

La pièce finie 7c réalisée par un moule d'injection selon le premier mode de réalisation est multicouche comme illustré en figure 7, les couches étant réparties sur une surface de la pièce finie 7c.

Le moule d'injection rotatif 1 selon le premier mode de réalisation permet de produire des pièces finies à paroi forte dont les couches de matières sont réalisées d'un seul côté comme représenté en figure 7.

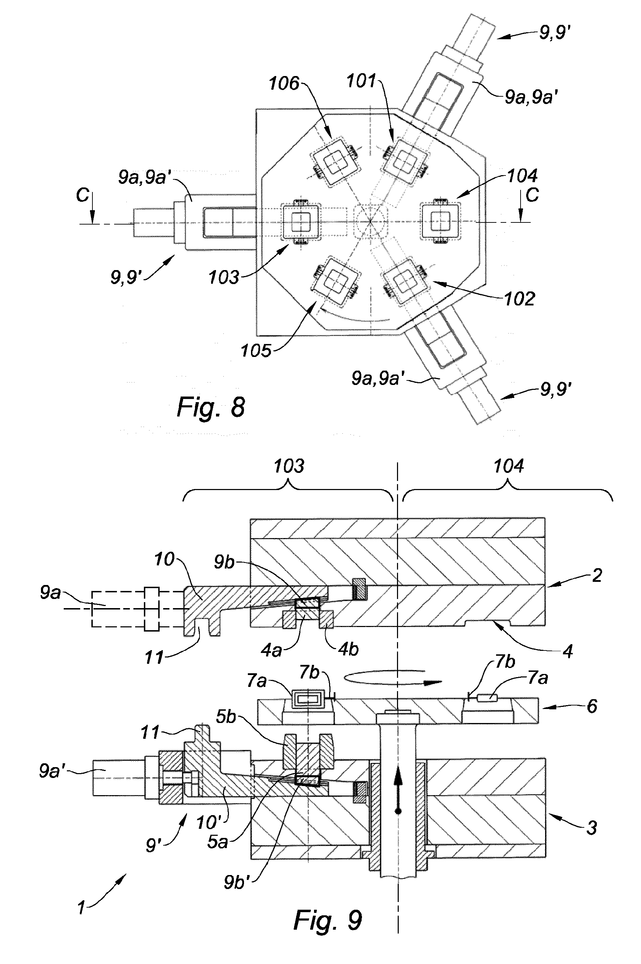

Un deuxième mode de réalisation du moule d'injection rotatif 1 va maintenant être décrit en référence aux figures 8 à 12.

Comme représenté en figure 8, le moule d'injection rotatif 1 comprend un premier poste d'injection 101, un deuxième poste d'injection 102, un troisième poste d'injection 103, un premier poste de refroidissement 104, un deuxième poste de refroidissement 105 et un poste d'éjection 106. Les postes 101, 102, 103, 104, 105, 106 sont répartis circulairement de manière à ce que le chargeur 6 passe de l'un à l'autre cycliquement.

Chaque poste d'injection 101, 102, 103 est pourvu de deux organes de compression 9, 9' associés à la buse d'injection 8 (non visible sur la figure 8) et d'un élément de commande 9a commandant chaque paire d'organes de compression 9, 9'. Un premier organe de compression 9 étant positionné au niveau de la première partie de moule 2 et un deuxième organe de compression 9' étant positionné au niveau de la deuxième partie de moule 3 comme illustré en exemple aux figures 9 à 11.

Aux figures 9 à 11, sont représentés le troisième poste d'injection 103 d'un côté du chargeur 6 et de l'autre côté du chargeur 6, le premier poste de refroidissement 104. Tous les postes 101 à 106 fonctionnent en simultanée de manière à augmenter le rendement. Ainsi, dans l'exemple illustré aux figures 9 à 11, l'injection d'une troisième couche de matière est réalisée simultanément au premier refroidissement d'une préforme 7a de pièce ayant subi sa première injection et première compression.

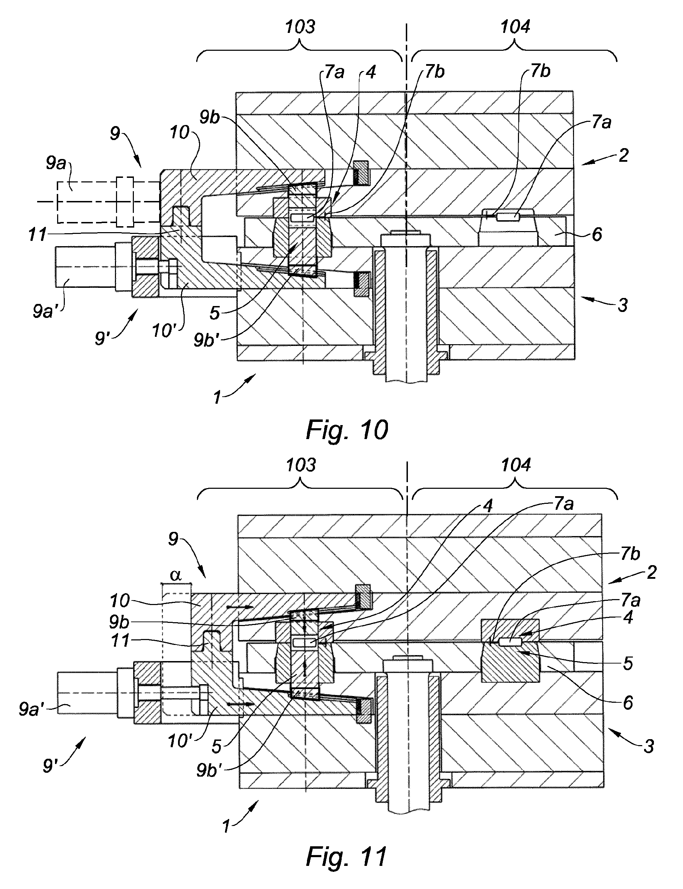

En figure 10, les organes de compression 9, 9' sont en position de retrait. La portion mobile 4a de l'empreinte de moulage 4 est calée dans la rampe de guidage 10 du premier organe de compression 9 au niveau de la première partie de moule 2, et une portion mobile 5a de l'empreinte de moulage complémentaire 5 est également calée dans la rampe de guidage 10' du deuxième organe de compression 9' au niveau de la deuxième partie de moule 3.

L'élément de commande 9a du dispositif de compression est un vérin hydraulique mais pourrait être un vérin numérique.

Une fois l'injection finie, les rampes de guidage 10, 10' des organes de compression 9, 9' se déplacent en translation selon un axe X-X sur une distance α représentée en figure 11. Les portions mobiles 4a, 5a respectivement de l'empreinte de moulage 4 et l'empreinte de moulage complémentaire 5 se rapprochent l'une de l'autre en suivant la trajectoire des rampes de guidage 10, 10', la matière injectée est ainsi comprimée dans l'espace de moulage.

Une fois la compression finie, le moule d'injection rotatif 1 est ouvert comme illustré en figure 9, les organes de verrouillage 11 du moule d'injection rotatif 1 sont déverrouillés et les organes de compression 9 ont repris leur position de retrait, le chargeur 6 est alors tourné de manière à ce qu'une autre préforme 7a soit traitée pour une troisième couche de matière et qu'une autre préforme 7a de pièce soit mise à refroidir au premier poste de refroidissement 104 et ainsi de suite pour les autres postes.

La figure 12 illustre toute les étapes de formation de la pièce finie 7c en fonction des postes du moule d'injection rotatif. La pièce finie 7c obtenue comprend trois couches de matière sur tout le volume ce qui en coupe correspond à cinq couches de matière, comme illustré en figure 12, dernière figure.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Moule d'injection rotatif (1) comprenant :
- une première partie de moule (2) fixe présentant au moins une empreinte de moulage (4),
- une deuxième partie de moule (3) mobile positionnée en regard de la première partie de moule (2),
- au moins une empreinte de moulage complémentaire (5) à l'empreinte de moulage de la première partie de moule (2),
- au moins un chargeur (6) configuré pour se déplacer au moins en rotation entre au moins un premier poste (101) dit premier poste d'injection et au moins un deuxième poste(102, 103, 104, 105, 106), ledit au moins un chargeur (6) étant positionné entre la première partie de moule (2) et la deuxième partie de moule (3),
- au moins une buse d'injection (8) de matière configurée pour introduire au moins une quantité de matière dans un espace de moulage délimité par l'empreinte de moulage (4) de la première partie de moule (2) et l'empreinte de moulage complémentaire (5),
**caractérisé en ce que** le moule d'injection rotatif (1) comprend en outre au moins un dispositif de compression configuré pour compresser au moins une quantité de matière injectée par la buse d'injection (8) dans l'espace de moulage de sorte à former une préforme (7a) de pièce ou une pièce finie (7c).

2. Moule d'injection rotatif selon la revendication 1, dans lequel l'empreinte de moulage (4) de la première partie de moule (2) comprend au moins une portion fixe (4b) et au moins une portion mobile (4a), ladite portion mobile (4a) étant mobile en translation en direction de l'empreinte de moulage complémentaire de manière à faire varier la dimension de l'espace de moulage.

3. Moule d'injection rotatif selon l'une quelconque des revendications 1 ou 2, dans lequel le dispositif de compression comprend au moins un élément de commande (9a) configuré pour gérer la vitesse de compression de la quantité de matière injectée.

4. Moule d'injection rotatif selon la revendication 2 prise en combinaison avec la revendication 3, dans lequel le dispositif de compression comprend un premier organe de compression (9) mobile en translation commandé par l'élément de commande (9a), ledit premier organe de compression (9) coopérant avec la portion mobile (4a) de l'empreinte de moulage (4) de la première partie de moule (2) de manière à ce que lorsque ledit premier organe de compression (9) se déplace en translation, la portion mobile (4a) de l'empreinte de moulage (4) de la première partie de moule (2) se déplace en direction de l'empreinte de moulage complémentaire (5).

5. Moule d'injection rotatif selon l'une quelconque des revendications 1 à 4, dans lequel le dispositif de compression comprend au moins un deuxième organe de compression (9').

6. Moule d'injection rotatif selon la revendication 5, dans lequel l'empreinte de moulage complémentaire (5) comprend au moins une portion fixe (5b) et au moins une portion mobile (5a), ladite portion mobile (5a) étant mobile en translation en direction de l'empreinte de moulage de la première partie de moule de manière à faire varier la dimension de l'espace de moulage.

7. Moule d'injection rotatif selon l'une quelconque des revendications 5 ou 6, dans lequel le premier organe de compression comprend une rampe de guidage avec laquelle la portion mobile de l'empreinte de moulage de la première partie de moule coopère et/ou le deuxième organe de compression comprend une rampe de guidage avec laquelle la portion mobile de l'empreinte de moulage complémentaire coopère.

8. Moule d'injection rotatif selon l'une quelconque des revendications 5 à 7, dans lequel le dispositif de compression comprend au moins un poinçon de compression.

9. Procédé d'injection mettant en oeuvre un moule d'injection rotatif (1) selon l'une quelconque des revendications 1 à 8, comprenant les étapes suivantes :
- fermeture du moule d'injection rotatif (1),
- mise en oeuvre d'un cycle d'injection comprenant les sous-étapes suivantes:
- sous-étape A : injection d'une première quantité matière dans l'espace de moulage, sur un premier poste (101),
- sous-étape B : refroidissement de la préforme (7a) de pièce,
- sous-étape C : injection d'une deuxième quantité matière dans l'espace de moulage sur au moins une surface de la préforme (7a) de pièce sur un deuxième poste (102),
- la sous-étape A et/ou la sous-étape C étant suivie d'une compression de la matière injectée,
- sous-étape D : refroidissement de la préforme (7a) de pièce ou d'une pièce finie (7c) obtenue en sous-étape C,
- éjection de la pièce finie (7c) ou mise en oeuvre d'un autre cycle d'injection jusqu'à ce que la pièce finie (7c) soit réalisée,
- une rotation du chargeur (6) étant effectuée avant et/ou après chaque sous-étape de refroidissement.

10. Procédé d'injection selon la revendication 9, dans lequel au moins deux sous-étapes (A, B, C, D) du cycle d'injection sont réalisées en simultané pour la formation de deux pièces finies (7c) ou préformes (7a) de pièces différentes.
